# EUROPEAN PATENT APPLICATION

(11) **EP 4 465 725 A1**
(43) Date of publication of application: **20.11.2024**
(21) Application number: 23794972.2
(22) Date of filing: 06.04.2023
(51) Int. Cl.: H04W 72/04

(54) **RESOURCE TRANSMISSION METHOD, RESOURCE RECEIVING METHOD, COMMUNICATION NODE, AND STORAGE MEDIUM**

(30) Priority: 29.04.2022 CN 202210476175
(71) Applicant: ZTE Corporation, Shenzhen, Guangdong 518057 (CN)
(72) Inventor: LU, Zhaohua, Shenzhen, Guangdong 518057 (CN); XIAO, Huahua, Shenzhen, Guangdong 518057 (CN); WANG, Yuxin, Shenzhen, Guangdong 518057 (CN); LIU, Wenfeng, Shenzhen, Guangdong 518057 (CN); ZHENG, Guozeng, Shenzhen, Guangdong 518057 (CN); LI, Lun, Shenzhen, Guangdong 518057 (CN); LI, Yong, Shenzhen, Guangdong 518057 (CN)
(74) Representative: Tiburzi, Andrea
(86) International application number: PCT/CN2023/086481
(87) International publication number: WO 2023/207539

(57) **Abstract**

Provided are a resource transmission method, a resource receiving method, a communication node, and a storage medium. The resource transmission method includes determining M target reference signal resources in a reference signal resource set, where the reference signal resource set includes N reference signal resources, M is a positive integer, N is a positive integer, and M < N; and transmitting the M target reference signal resources.

## Description

The present application claims priority to Chinese Patent Application No. 202210476175.4 filed with the China National Intellectual Property Administration (CNIPA) on Apr. 29, 2022, the disclosure of which is incorporated herein by reference in its entirety.

### FIELD

The present application relates to the field of radio communication network technology, for example, a resource transmission method, a resource receiving method, a communication node, and a storage medium.

### BACKGROUND

Beam scanning is a key process in beam management. A core problem of beam scanning is how to acquire accurate beam pairs with a relatively small amount of resource overhead. In general, if a transmitting end corresponds to A transmit beams and a receiving end corresponds to B receive beams, at most A * B beam scans will be required to select the optimal beam pair. If scanning is performed by stages, for example, one receive beam is fixed to scan A different transmit beams so as to select the optimal transmit beam, and then the transmit beam is fixed based on the optimal transmit beam to scan B different receive beams so as to select the optimal receive beam. Therefore, a relatively sound beam pair can be obtained through A + B beam scans. With the further increase of carrier frequency, the number of beams is further increased. That is, when at least one of A or B is very large, the resource overhead is also very large. The number of beam transmissions may be further reduced based on an artificial intelligence method. That is, the number of transmit beams that need to be actually used may be less than A, and the number of receive beams may also be less than B. On this basis, since the number of actually-transmitted beams is less than the number of configured beams, the number of reference signal resources corresponding to actual transmission is usually less than the number of reference signal resources in a reference signal resource set, and the reference signal resources in the reference signal resource set do not need to be totally transmitted. How to determine part of to-be-transmitted reference signal resources in the reference signal resource set is a problem that needs to be solved.

### SUMMARY

The present application provides a resource transmission method, a resource receiving method, a communication node, and a storage medium.

Embodiments of the present application provide a resource transmission method. The method includes the steps below.

M target reference signal resources in a reference signal resource set are determined, where the reference signal resource set includes N reference signal resources, M is a positive integer, N is a positive integer, and M < N.

The M target reference signal resources are transmitted.

Embodiments of the present application further provide a resource receiving method. The method includes the steps below.

M target reference signal resources in a reference signal resource set are received, where the reference signal resource set includes N reference signal resources, M is a positive integer, N is a positive integer, and M < N.

At least one piece of beam prediction information is determined according to the M target reference signal resources, and a preferred beam is determined according to the at least one piece of beam prediction information.

Embodiments of the present application further provide a communication node. The communication node includes a memory, a processor, and a computer program stored on the memory and executable by the processor. When the program is executed by the processor, the preceding resource transmission method or resource receiving method is performed.

Embodiments of the present application further provide a computer-readable storage medium for storing a computer program, where when the program is executed by a processor, the preceding resource transmission method or resource receiving method is performed.

### BRIEF DESCRIPTION OF DRAWINGS

FIG. 1 is a flowchart of a resource transmission method according to an embodiment.
FIG. 2 is a flowchart of a resource receiving method according to an embodiment.
FIG. 3 is a structural diagram of a resource transmission apparatus according to an embodiment.
FIG. 4 is a structural diagram of a resource receiving apparatus according to an embodiment.
FIG. 5 is a diagram illustrating a hardware structure of a communication node according to an embodiment.

### DETAILED DESCRIPTION

The present application is described hereinafter in conjunction with drawings and embodiments. It is to be understood that the embodiments described herein are intended to explain the present application and not to limit the present application. It is to be noted that if not in collision, embodiments of the present application and features therein may be combined with each other in any manner. Additionally, it is to be noted that for ease of description, only part, not all, of structures related to the present application are illustrated in the drawings.

In the present application, a communication node may be a transmitting end or receiving end of resources and may be a network device (for example, a base station) or a receiving device (for example, a terminal). A base station may be, for example, an evolutional node B (eNB or eNode B) in long term evolution (LTE) or long term evolution advanced (LTEA), a base station device in the 5th generation mobile communication technology (5G), or a base station in a future communication system. Base stations may include various macro base stations, micro base stations, home base stations, radio remote devices, routers and wireless fidelity (WIFI) devices, or various network devices such as primary cells and secondary cells, or location management function (LMF) devices. A terminal is a device having radio transceiving functions, which may be deployed on land, such as being deployed indoor or outdoor, or being handheld, worn or vehicle-mounted, may also be deployed on water (such as in ships), or may be also deployed in the air (such as in airplanes, balloons and satellites). The terminal may be, for example, a mobile phone, a Pad, a computer having the radio transceiving function, a virtual reality (VR) terminal, an augmented reality (AR) terminal, a radio terminal in remote medicine, a radio terminal in industrial control, a radio terminal in self-driving, a radio terminal in a smart grid, a radio terminal in transportation safety, a radio terminal in a smart city, or a radio terminal in smart home. Application scenarios are not limited in embodiments of the present application. The terminal may also be referred to as a user, a user equipment (UE), an access terminal, a UE unit, a UE station, a mobile station, a mobile platform, a remote station, a remote terminal, a mobile device, a UE terminal, a radio communication device, a UE agent, or a UE apparatus.

In the present application, indicators of various parameters may also be referred to as indices or identifiers (IDs). For example, resource indices include, but are not limited to, indices corresponding to, for example, reference signal resources, reference signal resource sets, reference signal resource configuration, channel state information (CSI) reports, CSI report sets, terminals, base stations, panels, neural networks, sub-neural networks, and neural network layers.

In the present application, high layer signaling includes, but is not limited to, radio resource control (RRC) and media access control control element (MAC CE). Physical layer signaling may also be transmitted between a network device and a terminal. For example, physical layer signaling is transmitted through a downlink in a physical downlink control channel (PDCCH), through an uplink in a physical uplink control channel (PUCCH), or through a physical random access channel (PRACH).

In embodiments of the present application, transmission includes sending or receiving, for example, sending or receiving data, and sending or receiving a signal. In some embodiments, the network device configures measurement resource information which is used to acquire channel state information. The measurement resource information includes C_{N} pieces of channel measurement resource (CMR) information and C_{M} pieces of interference measurement resource (IMR) information, where C_{N} and C_{M} are each a positive integer. The network device configures the measurement resource information in a report configuration (report config) or a reporting setting. The C_{N} pieces of CMR information are used for the terminal to measure a state of a channel. The C_{M} pieces of IMR information are used for the terminal to measure interference.

In some embodiments, artificial intelligence (AI) includes devices, components, software or modules with self-learning functions, such as machine learning (ML), deep learning, reinforcement learning, transfer learning, deep reinforcement learning or meta-learning. In some embodiments, artificial intelligence is implemented through an artificial intelligence network (also referred to as a neural network). The neural network includes multiple layers, and each layer includes at least one node. In an example, the neural network includes an input layer, an output layer, and at least one hidden layer. Each layer of the neural network may use at least one of a fully connected layer, a dense layer, a convolutional layer, a transposed convolutional layer, a direct connection layer, an activation function, a normalization layer, or a pooling layer. In some embodiments, each layer of the neural network may include a sub-neural network, such as a residual network block (Resnet block), a dense network (Densenet Block), or a recurrent neural network (RNN). The artificial intelligence network includes neural network models and/or neural network parameters corresponding to the neural network models. The neural network models may be called network models for short. The neural network parameters may be called network parameters for short. One network model defines network architecture such as the number of layers of the neural network, the size of each layer, an activation function, linking condition, the size of a convolution kernel, convolution stride, convolution type (such as 1D convolution, 2D convolution, 3D convolution, atrous convolution, transposed convolution, separable convolution, group convolution, or dilated convolution). Network parameters are weights and/or offsets of each layer of network in the network model and their values. One network model may correspond to multiple sets of different neural network parameter values to adapt to different scenarios. The values of a network parameter may be obtained through offline training and/or online training. One neural network model may correspond to multiple different neural network parameter values.

In some embodiments, especially in high frequency transmission, due to a high carrier frequency ratio, the path loss is large, and beamforming is needed to concentrate energy in the direction of the terminal for transmission. Therefore, beam management is needed. Beam management includes, but is not limited to, beam scanning, beam tracking and beam recovery. The core problem that needs to be solved is how to acquire an accurate beam pair with the lowest resource overhead as possible. Beam scanning includes beam scanning at a sending end and/or beam scanning at a receiving end. In order to reduce the overhead of beam scanning, two-stage scanning may be performed. In some embodiments, beam scanning may include training at a P1 stage, a P2 stage, and a P3 stage. At the P1 stage, a beam at the sending end and a beam at the receiving end are scanned simultaneously. For beam scanning at the P2 stage, one receive beam is fixed, and different transmit beams are scanned. At the P3 stage, one transmit beam is fixed, and different receive beams are scanned. In an example, the value of a repetition parameter is off through the transmission of A beams and one fixed receive beam. Then the reference signal receiving power (RSRP) corresponding to the A beams is measured to find preferred K beam indices for reporting. Alternatively, the value of the repetition parameter is on through the transmission of one beam and B fixed receive beams. Then the RSRP corresponding to the B beams is measured to find preferred K beam indices for reporting. When one or both of A and B are relatively great, the overhead is very large. In an example, the beam prediction function of AI may be used. That is, only beam measurement parameters corresponding to M beams are input, but beam measurement parameters corresponding to N beams are predicted according to these beam measurement parameters, where the N beams may include the M beams (M < N). Each beam may correspond to a beam direction. A beam may be a transmit beam, a receive beam, or a transmit and receive beam pair.

In some embodiments, beams include transmit beams, receive beams, precoding, precoding matrices, precoding matrix indices, receive and transmit beam pairs, and transmit and receive beam pairs. A beam may be a resource (such as sending end precoding, receiving end precoding, an antenna port, an antenna weight vector, and an antenna weight matrix). A beam index may be replaced with a resource index because the beam may be bound to some time-frequency/code resources for transmission. A beam may also be a transmission (sending/receiving) manner including, for example, space division multiplexing or frequency-domain/time-domain diversity. A receive beam indicator refers to that a sending end may perform indication through a current reference signal resource (or a reference signal resource index), a reference signal resource (or a benchmark reference signal resource or reference signal resource index) fed back and reported by an antenna port and a UE, and the quasi-co-location indicator (QCL) assumption of an antenna port. A beam pair includes a combination of a transmit beam indicator and a receive beam indicator.

In some embodiments, a beam direction or beam angle may include at least one of an angle of arrival (AOA), an angle of departure (AOD), a zenith angle of departure (ZOD), a zenith angle of arrival (ZOA), a vector or vector index constructed from at least one angle of AOA, AOD, ZOD, or ZOA, a discrete Fourier transformation (DFT) vector, a codeword in a codebook, a transmit beam index, a receive beam index, a transmit beam group index, or a receive beam group index.

In some embodiments, a beam may refer to a spatial filter or a spacial receive/transmit parameter. Spatial filtering may be at least one of a DFT vector, a precoding vector, a DFT matrix, a precoding matrix, a vector constituted by a linear combination of multiple DFTs, or a vector constituted by a linear combination of multiple precoding vectors.

In some embodiments, K beams are selected from N beams according to beam measurement parameters to serve as preferred beams. In an example, preferred beams may be selected according to the ordering of N beam measurement parameters, and beams corresponding to K largest beam measurement parameters are selected to serve as the preferred beams. In an example, preferred beams may be selected according to probabilities calculated according to the N beam measurement parameters, and probabilities calculated according to the N beam measurement parameters are sorted so that K beams with largest probabilities corresponding to beam measurement parameters are selected to serve as preferred beams. In an example, K = 1, indicating that the selected beam is a preferred beam. Here K is a positive integer greater than or equal to 1, N is a positive integer, and K ≤ N.

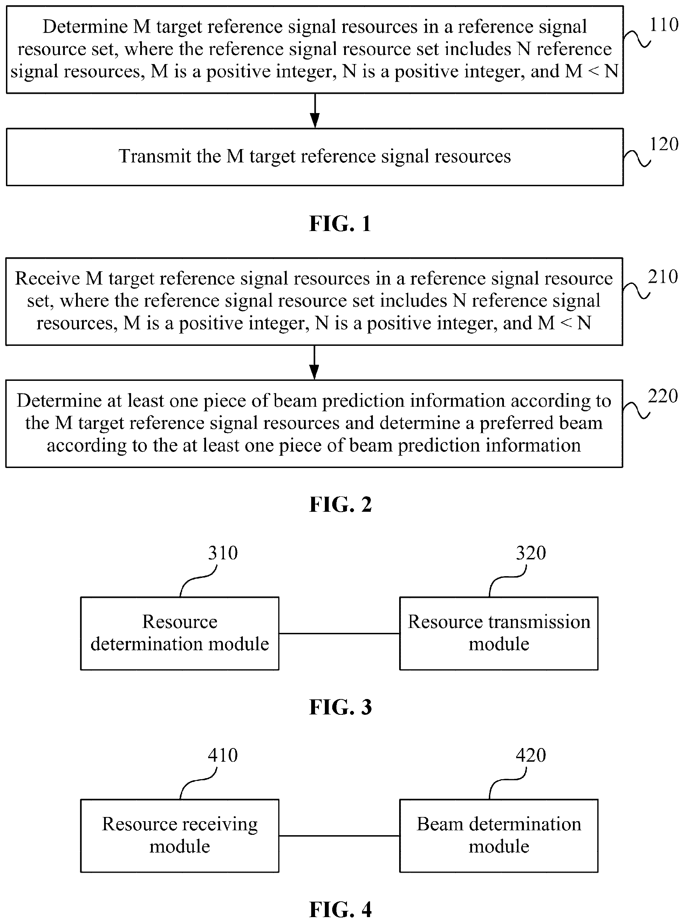

In embodiments of the present application, a resource transmission method is provided to determine and transmit part of the reference signal resources in a reference signal resource set. FIG. 1 is a flowchart of a resource transmission method according to an embodiment. As shown in FIG. 1, the method provided in this embodiment includes 110 and 120.

In 110, M target reference signal resources in a reference signal resource set are determined, where the reference signal resource set includes N reference signal resources, M is a positive integer, N is a positive integer, and M < N.

In 120, the M target reference signal resources are transmitted.

In this embodiment, a sending end of reference signal resources may send reference signals (RS) to a receiving end by transmitting the target reference signal resources. A reference signal may be, for example, a channel state information reference signal (CSI-RS), a channel state information interference measurement signal (CSI-IM), a sounding reference signal (SRS), a synchronization signal block (SSB), a physical broadcast channel (PBCH), or a synchronization broadcast block/physical broadcast channel (SSB/PBCH). A CSI-RS includes a zero power CSI-RS (ZP CSI-RSs) and a non-zero power CSI-RS (NZP CSI-RS). The CSI-RS may also be used for tracking and is referred to as a CSI-RS for tracking (TRS). A CSI-IM is generally used for measuring interference. An SRS is used for channel estimation. An SSB includes a synchronization broadcast block and/or a physical broadcast channel.

The time domain feature of a reference signal may be aperiodic, periodic, or semi-persistent, indicating that the transmitted reference signal is transmitted aperiodically, periodically, or semi-persistently respectively. Through high layer signaling, a period and/or a piece of slot offset information may be configured for a periodic reference signal or a semi-persistent reference signal. These two parameters may be jointly encoded (for example, configured through high layer signaling periodicityAndOffset). In this case, the transmission period and transmission slot of a semi-persistent reference signal is able to be known. A resource element (RE) set included in a time-frequency resource corresponding to a reference signal is referred to as a reference signal resource. The reference signal resource may be, for example, a CSI-RS resource, an SRS resource, a CSI-IM resource, or an SSB resource.

Resources for transmitting reference signals may be referred to as reference signal resources which may be divided into multiple sets, that is, reference signal resource sets (for example, CSI-RS resource sets, CSI-IM resource sets, or SRS resource sets). A reference signal resource set includes N reference signal resources. Multiple reference signal resource sets may be derived from the same reference signal resource setting (for example, CSI-RS resource setting, SRS resource setting, or CSI-IM resource setting).

A target reference signal resource refers to a determined reference signal resource that is transmitted finally. The number of target reference signal resources is M, which may be determined according to the number of to-be-transmitted beams, where M < N. In an example, the number of corresponding target reference signal resources in different transmission slots may be different. In an example, resource indices corresponding to M target reference signal resources corresponding to different transmission slots may be different.

In an embodiment, a network device configures C reference signal resource sets through high layer signaling (for example, RRC). Each reference signal resource set includes at least one reference signal resource. In an example, the network device selects one of the reference signal resource sets. The reference signal resource set includes N reference signal resources, and N is an integer greater than or equal to 1. In an example, a reference signal resource includes a channel measurement resource and an interference measurement resource, and a reference signal resource set includes a channel measurement resource set and an interference measurement resource set. In an example, the reference signal resource is a CSI-RS resource, and the reference signal resource set is a CSI-RS resource set. In an example, the reference signal is an SSB, and the reference signal resource set is an SSB resource set. In an example, the reference signal resource is an SRS resource, and the reference signal resource set is an SRS resource set. In an example, the number of activated target reference signal resources fed back by a terminal received by the network device is M. In an example, the network device determines, according to channel state information, the number of the activated target reference signal resources determined is M. In an example, the N reference signal resources correspond to N beams, and the beams may be transmit beams, receive beams, or transmit and receive beam pairs. In an example, the beams are receive beams, and at least two of the N beams are the same beam. In an example, the beams are transmit beams, and at least two of the N beams are different beams. M and N are each a positive integer, and M < N.

In an example, according to the number M of activated target reference signal resources, the network device selects, according to a target reference signal source selection rule, M reference signal resources from the N reference signal resources in the reference signal resource set to serve as target reference signal resources and transmits the M target reference signal resources; and the terminal receives the M target reference signal resources and measures and obtains, according to the M target reference signal resources, at least D beam measurement parameters. In an example, the terminal feeds back the D beam measurement parameters, and the network device receives the D beam measurement parameters fed back by the terminal and inputs the received D beam measurement parameters into a neural network. In an example, the neural network outputs E beam measurement parameters and may select K beams to serve as preferred beams. For example, the E beam measurement parameters are sorted, and K beams corresponding to K beam measurement parameters with largest orders are preferred beams. In an example, the neural network outputs probabilities corresponding to E beams and selects, according to the probabilities corresponding to the E beams, K beams to serve as preferred beams. For example, the E probabilities are sorted, and K beams corresponding to K largest probabilities are preferred beams. In an example, the neural network outputs (indices of) K preferred beams directly. In an example, the network device uses a transmit beam corresponding to at least one of the selected K preferred beams for data transmission, and the terminal uses a receive beam corresponding to at least one of the K preferred beams for data receiving. D, E, N, M, and K are each a positive integer. K ≤ M ≤ N. N ≤ E. M ≤ D. In an example, D = M * R, where R is the number of receive beams for receiving target reference signals. In an example, E = N * R1, where R1 is the number of total receive beams of the terminal and is generally greater than or equal to R.

In the resource transmission method of this embodiment, the target reference signal resources are selected from the reference signal resource set for transmission, avoiding unnecessary resource transmission and reducing resource overhead.

In an embodiment, the step in which the M target reference signal resources in the reference signal resource set are determined includes one of the following: it is determined that M reference signal resources with smallest indices in the reference signal resource set are the target reference signal resources; it is determined that M reference signal resources with largest indices in the reference signal resource set are the target reference signal resources; it is determined that M reference signal resources, in the reference signal resource set, whose indices are odd are the target reference signal resources; it is determined that M reference signal resources, in the reference signal resource set, whose indices are even are the target reference signal resources; it is determined that M reference signal resources indicated by a reference signal resource bitmap are the target reference signal resources; M reference signal resources are selected randomly from the reference signal resource set to serve as the target reference signal resources; M reference signal resources are selected from the reference signal resource set according to an agreed formula to serve as the target reference signal resources; or M reference signal resources are selected from the reference signal resource set according to reference signal resource start and end indices to serve as the target reference signal resources.

In an embodiment, the method includes at least one of the following: first trigger signaling is received, and a transmission slot of the target reference signal resources is determined according to the first trigger signaling; second trigger signaling is received, and the number (M) of the target reference signal resources is determined according to the second trigger signaling; third trigger signaling is received, and reference signal resource indices and/or offsets corresponding to the target reference signal resources are determined according to the third trigger signaling; fourth trigger signaling is received, and reference signal resource start and end indices corresponding to the target reference signal resources are determined according to the fourth trigger signaling; fifth trigger signaling is received, and a reference signal resource bitmap is determined according to the fifth trigger signaling; or sixth trigger signaling is received, and a beam failure recovery (BFR) parameter is determined according to the sixth trigger signaling.

In an embodiment, the M target reference signal resources correspond to M transmit beams. That is, the M target reference signal resources are transmitted according to the M transmit beams.

In an embodiment, the step in which the M target reference signal resources are transmitted includes the step below.

The M target reference signal resources are transmitted in L slots, where L ≥ 1.

In an embodiment, the step in which the M target reference signal resources are transmitted in the L slots includes transmitting the M target reference signal resources in each of the L shots, where a reference signal resource index set corresponding to the M target reference signal resources transmitted in each of the L slots is the same, or a reference signal resource index set corresponding to the M target reference signal resources transmitted in each of at least two slots among the L slots is different.

In an embodiment, different numbers of target reference signal resources are transmitted in at least two slots among the L slots.

In an embodiment, the number of target reference signal resources transmitted in a j-th shot is not less than the number of target reference signal resources transmitted in an i-th slot, where 1 ≤ i < j ≤ L.

In an embodiment, the number of target reference signal resources transmitted in the j-th shot is not less than the number of target reference signal resources transmitted in the i-th slot, where 1 ≤ i < j ≤ L, and j ≥ k + c, where k denotes a slot for receiving BFR signaling, c denotes the number of slots corresponding to s time units after a time unit of receiving the BFR signaling, s is a positive integer, and j and k are each a positive integer.

In an embodiment, the L slots are L consecutive slots.

In an embodiment, the L slots are L slots with an interval of T, where T denotes a transmission period of periodic or semi-persistent reference signal resources or a transmission interval agreed in aperiodic reference signal resources, and T is an integer greater than 1.

In an embodiment, the transmission of the M target reference signal resources is triggered in an aperiodic manner, or the transmission of the M target reference signal resources is triggered in the L slots in an aperiodic manner, where L ≥ 1.

In an embodiment, the transmission of the M target reference signal resources is triggered in an aperiodic manner, or the transmission of the M target reference signal resources is triggered in the L slots in an aperiodic manner, where L ≥ 1. In an example, the terminal triggers aperiodic CSI-RSs once, the base station transmits the target reference signal resources in the L slots L times, and the number of M target reference signal resources transmitted in each slot is the same, where L > 1. In an example, the terminal triggers aperiodic CSI-RSs once, the base station transmits the target reference signal resources in the L slots L times, and the target reference signal resources transmitted in at least two slots are different, where L > 1. In an example, the terminal triggers aperiodic CSI-RSs once, the base station transmits the target reference signal resources in the L slots L times, and target reference signal resources transmitted in at least two slots correspond to different indices, where L > 1.

In an embodiment, the transmission of the M target reference signal resources is activated in a semi-persistent manner, or the transmission of the M target reference signal resources is deactivated to stop in a semi-persistent manner.

In an embodiment, the method further includes the following.

In 130, the D beam measurement parameters fed back by the terminal are received.

In 140, at least one piece of beam prediction information is determined according to the D beam measurement parameters and the neural network.

In 150, a preferred beam is determined according to the at least one piece of beam prediction information.

Beam prediction information includes one of beam measurement parameters corresponding to E beams, probabilities corresponding to E beams, or indices of K preferred beams. E is an integer greater than D. D and K are each a positive integer. Beams include transmit beams, receive beams, or transmit and receive beams. In an example, D = M * R, where R is the number of receive beams for receiving target reference signals. In an example, E = N * R1. N is a positive integer greater than M and denotes the number of reference signal resources. In some cases, N is equal to the number of transmit beams. R1 is the number of total receive beams of the terminal and is generally greater than or equal to R.

In an embodiment, the beam measurement parameter includes at least one of reference signal receiving power (RSRP), the signal to interference plus noise ratio (SINR) of a reference signal, reference signal receiving quality (RSRQ), a beam angle, a transmit beam index, a receive beam index, the beam pair index of a transmit beam and a receive beam, a beam domain receive power map (BDRPM), a channel state information reference signal resource indicator (CSI-RS resource indicator, or CRI), an SS/PBCH block resource indicator (SSBRI), the linear value of RSRP, the linear value of RSRQ, the linear value of SINR, the logarithmic value of RSRP, the logarithmic value of RSRQ, or the logarithmic value of SINR.

In an embodiment, the method further includes the following.

In 160, beam measurement parameters at Y moments are predicted according to beam measurement parameters at X historical moments.

In 170, preferred beams corresponding to the Y moments are determined according to beam measurement parameters at L moments.

X is a positive integer, and Y is a positive integer.

The preceding resource transmission method is described through some exemplary embodiments hereinafter.

In an embodiment, AI for predicting beam measurement parameters may be implemented through one neural network. Beam measurement parameters corresponding to D beams are combined into a beam measurement parameter array (a first beam measurement parameter array) which is input into the neural network. The neural network outputs a beam measurement parameter array (a second beam measurement parameter array) corresponding to E beams. Moreover, preferred beams are determined through beams corresponding to K beam measurement parameters with largest values in the beam measurement parameter array corresponding to the E beams. E is generally greater than D. K, D, and E are each a positive integer.

In an embodiment, neural network parameters are acquired through online training or offline training. For example, by inputting at least one sample and label, a neural network model is trained to acquire the neural network parameters. In an example, a sample is one first beam measurement parameter array measured by one terminal, and a label is a second beam measurement parameter array corresponding to the first beam measurement parameter array measured by the terminal. In network training, first beam measurement parameter arrays correspond to second beam measurement parameter arrays and, preferably, in a one-to-one manner. At the deployment or testing phase of the neural network, one second beam measurement parameter array is output by inputting a first beam measurement parameter array into the neural network. In an example, each element of the first beam measurement parameter array and each element of the second beam measurement parameter array are of the same type; for example, each element of the first beam measurement parameter array and each element of the second beam measurement parameter array are RSRP, SINR, RSRQ, or BDRPM. In an example, each element of the first beam measurement parameter array and each element of the second beam measurement parameter array are of different types. For example, each element of the first beam measurement parameter array is RSRP, SINR, RSRQ, or BDRPM; while each element of the second beam measurement parameter array is, for example, the probability of a predicted beam or the index of a predicted beam.

In an embodiment, transmit beam indices and/or receive beam indices are numbered in an agreed manner to form beam indices. One beam index includes one of a transmit beam index, a receive beam index, or a transmit and receive beam pair index. One beam index corresponds to one beam direction or a vector or matrix corresponding to one beam direction. The terminal receives reference signals (for example, CSI-RSs or SSBs) and measures a beam measurement parameter (for example, one of L1-RSRP, L1-SINR, or RSRQ) corresponding to each beam to constitute a beam measurement parameter set. For elements in the beam measurement parameter set, beam indices are sorted according to one rule to obtain a beam measurement parameter array. In general, a first beam measurement parameter array is a beam measurement parameter array formed by beam measurement parameters corresponding to a first beam set, and a second beam measurement parameter array is a beam measurement parameter array formed by beam measurement parameters corresponding to a second beam set. The first beam set is one subset of the second beam set.

In an embodiment, elements of a first beam measurement parameter array need to be normalized in order to facilitate a faster convergence of the neural network. Normalization refers to that only values of elements of an array are normalized to one value in a range greater than or equal to a and less than or equal to b. In an example, a = - 0.5, and b = 0.5. In an example, a = 0, and b = 1. In an example, normalization is implemented by dividing the elements of the array by the element with the largest absolute value in the elements of the array. In an example, normalization is implemented by dividing the elements of the array by the variance of the elements of the array. In an example, normalization is implemented by dividing the elements of the array by a fixed value (for example, the maximum value of all elements in all samples). In an example, normalization is implemented by dividing the elements of the array by a statistical value (for example, the statistical variance of all elements in all samples). For indices, such as beam indices, CRIs, or SSBRIs, normalization may be implemented through one-hot encoding.

In an embodiment, the network device or the terminal determines M target reference signal resources in a reference signal resource set. The reference signal resource set includes N reference signal resources. That is, M transmit beams are selected from N beams according to a certain rule. The network device sends only the target reference signal resources corresponding to the M transmit beams. The terminal obtains D beam measurement parameters by receiving the target reference signal resources corresponding to the M transmit beams, combines the D beam measurement parameters into a beam measurement parameter array in a certain order, normalizes the beam measurement parameter array, and then inputs the beam measurement parameter array into the neural network. In some embodiments, the beam measurement parameter array is directly inputted into the neural network to obtain beam prediction information including E elements. The beam prediction information includes a beam measurement parameter array of the E elements. Beams corresponding to K beam measurement parameters (such as RSRP, SINR, or RSRQ) with largest beam measurement parameters in the beam measurement parameter array are selected to serve as preferred beams. At least one of the K preferred beams is used for data or signal transmission. Here beams include transmit beams and/or receive beams. Here D, E, N, M, and K are each an integer, K ≥ 1, M ≥ K, N > M, and E is an integer greater than D. In an example, D = M * R, where R is the number of receive beams for receiving target reference signals. In an example, E = N * R1. N is a positive integer greater than M and denotes the number of reference signal resources. In some cases, N is equal to the number of transmit beams. R1 is the number of total receive beams of the terminal and is generally greater than or equal to R.

In an embodiment, the network device or the terminal determines M target reference signal resources in a reference signal resource set. The reference signal resource set includes N reference signal resources. That is, M transmit beams are selected from N beams according to a certain rule. The network device sends only the target reference signal resources corresponding to the M transmit beams. The terminal obtains D beam measurement parameters by receiving the target reference signal resources corresponding to the M transmit beams, combines the D beam measurement parameters into a beam measurement parameter array in a certain order, and feeds back the beam measurement parameter array. The network device receives the beam measurement parameter array, normalizes the beam measurement parameter array, and inputs the beam measurement parameter array into the neural network. In some embodiments, the beam measurement parameter array is directly inputted into the neural network to obtain beam prediction information. The beam prediction information includes a beam measurement parameter array of E elements. Beams corresponding to K beam measurement parameters (such as RSRP, SINR, or RSRQ) with largest beam measurement parameters in the beam measurement parameter array are selected to serve as preferred beams. At least one of the K preferred beams is used for data or signal transmission. Here beams include transmit beams and/or receive beams. Here D, E, N, M, and K are each an integer, K ≥ 1, M ≥ K, N > M, and E is an integer greater than D. In an example, D = M * R, where R is the number of receive beams for receiving target reference signals. In an example, E = N * R1. N is a positive integer greater than M and denotes the number of reference signal resources. In some cases, N is equal to the number of transmit beams. R1 is the number of total receive beams of the terminal and is generally greater than or equal to R.

In an embodiment, the network device or the terminal determines M target reference signal resources in a reference signal resource set. The reference signal resource set includes N reference signal resources. That is, M transmit beams are selected from N beams according to a certain rule. The network device sends only the target reference signal resources corresponding to the M transmit beams. The terminal obtains D beam measurement parameters by receiving the target reference signal resources corresponding to the transmit beams, combines the D beam measurement parameters into a beam measurement parameter array in a certain order, normalizes the beam measurement parameter array, and then inputs the beam measurement parameter array into the neural network. In some embodiments, the beam measurement parameter array is directly inputted into the neural network to obtain beam prediction information. The beam prediction information includes probabilities corresponding to E beams. K beams corresponding to K largest probabilities in the beam measurement parameter array are selected to serve as preferred beams. At least one of the K preferred beams is used for data or signal transmission. Here beams include transmit beams and/or receive beams. Here D, E, N, M, and K are each an integer, K ≥ 1, M ≥ K, N > M, and E is an integer greater than D. In an example, D = M * R, where R is the number of receive beams for receiving target reference signals. In an example, E = N * R1. N is a positive integer greater than M and denotes the number of reference signal resources. In some cases, N is equal to the number of transmit beams. R1 is the number of total receive beams of the terminal and is generally greater than or equal to R.

In an embodiment, the network device or the terminal determines M target reference signal resources in a reference signal resource set. The reference signal resource set includes N reference signal resources. That is, M transmit beams are selected from N beams according to a certain rule. The network device sends only the target reference signal resources corresponding to the M transmit beams. The terminal obtains D beam measurement parameters by receiving the target reference signal resources corresponding to the transmit beams, combines the D beam measurement parameters into a beam measurement parameter array in a certain order, and feeds back the beam measurement parameter array. The network device receives the beam measurement parameter array, normalizes the beam measurement parameter array, and inputs the beam measurement parameter array into the neural network. In some embodiments, the beam measurement parameter array is directly inputted into the neural network to obtain beam prediction information. The beam prediction information includes probabilities corresponding to E beams. K beams corresponding to K largest probabilities in the beam measurement parameter array are selected to serve as preferred beams. At least one of the K preferred beams is used for data or signal transmission. Here beams include transmit beams and/or receive beams. Here D, E, N, M, and K are each an integer, K ≥ 1, M ≥ K, N > M, and E is an integer greater than D. In an example, D = M * R, where R is the number of receive beams for receiving target reference signals. In an example, E = N * R1. N is a positive integer greater than M and denotes the number of reference signal resources. In some cases, N is equal to the number of transmit beams. R1 is the number of total receive beams of the terminal and is generally greater than or equal to R.

In an embodiment, the network device or the terminal determines M target reference signal resources in a reference signal resource set. The reference signal resource set includes N reference signal resources. That is, M transmit beams are selected from N beams according to a certain rule. The network device sends only the target reference signal resources corresponding to the M transmit beams. The terminal obtains D beam measurement parameters by receiving the target reference signal resources corresponding to the transmit beams, combines the D beam measurement parameters into a beam measurement parameter array in a certain order, normalizes the beam measurement parameter array, and then inputs the beam measurement parameter array into the neural network. In some embodiments, the beam measurement parameter array is directly inputted into the neural network to directly output indices of K preferred beams. At least one of the K preferred beams is used for data or signal transmission. Here beams include transmit beams and/or receive beams. Here D, N, M, and K are each an integer, K ≥ 1. M ≥ K, and N > M. D = M * R, where R is the number of beams actually received by the terminal.

In an embodiment, the network device or the terminal determines M target reference signal resources in a reference signal resource set. The reference signal resource set includes N reference signal resources. That is, M transmit beams are selected from N beams according to a certain rule. The network device sends only the target reference signal resources corresponding to the M transmit beams. The terminal obtains D beam measurement parameters by receiving the target reference signal resources corresponding to the transmit beams, combines the D beam measurement parameters into a beam measurement parameter array in a certain order, and feeds back the beam measurement parameter array. The network device receives the beam measurement parameter array, normalizes the beam measurement parameter array, and inputs the beam measurement parameter array into the neural network. In some embodiments, the beam measurement parameter array is directly inputted into the neural network to directly output indices of K preferred beams. At least one of the K preferred beams is used for data or signal transmission. Here beams include transmit beams and/or receive beams. Here N, M, and K are each an integer, K ≥ 1, M ≥ K, and N > M. D = M * R, where R is the number of beams actually received by the terminal.

In these embodiments, N > M. For example, N may be a multiple of M. For example, N is a natural multiple of M; for example, N is twice, three times, four times, five times, or six times as much as M. N - M beams do not actually transmit signals, and their beam measurement values are predicted with no need for transmitting corresponding reference signals.

In an embodiment, a beam measurement parameter array is a two-dimensional array, for example, a vector. In an embodiment, a beam measurement parameter array is a two-dimensional array, for example, a matrix. In an embodiment, a beam measurement parameter array is an array greater than two dimensions, for example, a tensor. A vector or a matrix may be regarded as a special case of a tensor.

In an embodiment, a beam measurement parameter is the L1 reference signal received power (L1-RSRP or RSRP) corresponding to at least one beam. In an example, a beam measurement parameter is the L1 signal-to-noise and interference ratio (L1-SINR or SINR) corresponding to at least one beam. In an example, a beam measurement parameter is the reference signal received quality (RSRQ) corresponding to at least one beam. In an example, a beam measurement parameter is a beam angle (at least one of AOA, ZOA, AOD, or ZOD, which is sometimes also referred to as a horizontal arrival angle, a vertical arrival angle, a horizontal departure angle, or a vertical departure angle respectively) corresponding to at least one beam. In an example, a beam measurement parameter is a transmit beam index corresponding to at least one beam. In an example, a beam measurement parameter is a receive beam index corresponding to at least one beam. In an example, the beam measurement parameter is a transmit beam and receive beam pair index (a beam pair index or a beam pair for short) corresponding to at least one beam. In an example, a beam measurement parameter is a beam domain receive power map (BDRPM) corresponding to at least one beam. In an example, a beam measurement parameter is a channel state information reference signal resource indicator (CSI-RS Resource Indicator, or CRI) corresponding to at least one beam. In an example, a beam measurement parameter is a synchronization signal block resource indicator (SSBRI) corresponding to at least one beam. In an example, a beam measurement parameter is a combination of at least two of the following beam measurement parameters corresponding to at least one beam: RSRP, RSRQ, SINR, a beam angle, a transmit beam index, a receive beam index, a beam pair index, a CRI, or an SSBRI. In an example, a beam measurement parameter is the linear value of one of RSRP, RSRQ, or SINR. In an example, a beam measurement parameter is the logarithmic value or decibel value (DB) of one of RSRP, RSRQ, or SINR.

In an example, a beam measurement parameter is obtained based on CSI-RS resource measurement. In an example, a beam measurement parameter is obtained based on SSB resource measurement. In an example, a beam measurement parameter is obtained based on SRS resource measurement. In an example, a beam measurement parameter is obtained based on measuring at least one channel measurement resource and at least one interference measurement resource.

In an embodiment, the network device includes at least one transmit panel. Each panel has 4 rows and 8 columns of elements corresponding to Nt = 32 transmit beams (Txbeams). The terminal includes Npr = 2 receive panels. Each panel includes 2 rows and 4 columns of elements corresponding to Nr = 8 receive beams (Rxbeams). In total, these correspond to N = 2 (panels) * 8 (Rxbeams) * 32 (Txbeams) = 512 beam pairs. Each beam pair may obtain a corresponding beam measurement parameter (for example, RSRP) by receiving a reference signal corresponding to the beam. However, in practice, if reference signal resources corresponding to the 512 beams are transmitted for each beam scan, the overhead of reference signal resources will be excessively large. One method is to use a subset of all the N = 512 beams, that is, M beams, to predict the beam measurement parameters (for example, RSRP) on all the N beams. Moreover, preferred receive beams and/or transmit beams are determined based on the beam measurement parameters (for example, RSRP). For example, beams corresponding to K largest RSRP values in a beam measurement parameter array are selected to serve as preferred beams. Nr, Nt, N, and M may be other positive integers. At least one of the K preferred beams is used for data or signal transmission. Here beams include transmit beams and/or receive beams. Here N, M, and K are each an integer, K ≥ 1, M ≥ K, and N > M. RSRP may be replaced with another beam measurement parameter, for example, at least one of RSRQ, SINR, BDRPM, or beam angle.

In an embodiment, the network device or the terminal uses the received beam measurement parameters at X historical moments to predict beam measurement parameters at Y future moments and uses beam measurement parameters at Y future moments to determine preferred beams corresponding to the Y moments. Here X and Y are each a positive integer, where X is greater than 1, and Y may be greater than or equal to 1. In an example, the number of beams at the X moments and the number of beams at the Y moments may both be M. In an example, the number of beams at the X moments may be M1, the number of beams at the Y moments may be M2, and M1 is not equal to M2.

The embodiments below are used to describe a method or rule for the network device or the terminal to select M target reference signal resources from N reference signal resources. The N reference signal resources belong to the same reference signal resource set. The M target reference signal resources form a subset of the N reference signal resources. N and M are each a positive integer. M < N. In an example, each beam corresponds to one reference signal resource.

In an embodiment, a method for the network device or the terminal to select the M target reference signal resources from the N reference signal resources is that the network device or the terminal selects M reference signal resources with smallest indices from the N reference signal resources to serve as the target reference signal resources.

In an embodiment, a method for the network device or the terminal to select the M target reference signal resources from the N reference signal resources is that the network device or the terminal selects M reference signal resources with largest indices from the N reference signal resources to serve as the target reference signal resources.

In an embodiment, a method for the network device or the terminal to select the M target reference signal resources from the N reference signal resources is that the network device or the terminal selects M reference signal resources M reference signal resources whose indices are odd from the N reference signal resources to serve as the target reference signal resources.

In an embodiment, a method for the network device or the terminal to select the M target reference signal resources from the N reference signal resources is that the network device or the terminal selects M reference signal resources M reference signal resources whose indices are even from the N reference signal resources to serve as the target reference signal resources.

In an embodiment, a method for the network device or the terminal to select the M target reference signal resources from the N reference signal resources is that M reference signal resources are selected from the N reference signal resources according to reference signal resource start and end indices to serve as the target reference signal resources. In an example, the reference signal resource start and end indices include the start index S of the reference signal resources and the end index E of the reference signal resources. The M target reference signal resources are M reference signals with indices from S to E. In an example, the reference signal resource start and end indices include the start index S of the reference signal resources and the number M of reference signal resources. The M target reference signal resources are M consecutive reference signals with indices starting from S. That is, the network device or the terminal selects M reference signal resources with reference signal resource indices from S to S + M - 1 from the N reference signal resources, where S and S + M - 1 are the reference signal resource start and end indices. S may be acquired by the terminal and fed back to the network device. Alternatively, S may be acquired by the network device and configured to the terminal. S is greater than or equal to 0 and less than N - M.

In an embodiment, a method for the network device or the terminal to select the M target reference signal resources from the N reference signal resources includes the following: In an example, the network device or the terminal selects M reference signal resources from the N reference signal resources in the manner of a reference signal resource bitmap. The reference signal resource bitmap may be acquired by the terminal and fed back to the network device. Alternatively, the reference signal resource bitmap may be acquired by the network device and configured to the terminal. In an example, the reference signal resource bitmap includes N bits. Each bit is used to determine whether a reference signal resource of a corresponding index is transmitted, is activated, or is a target reference signal resource. For example, when the i-th bit takes a first value, it indicates that the i-th reference signal resource in the reference signal resource set may be transmitted, be activated, or be a target reference signal resource. When the i-th bit takes a second value, it indicates that the i-th reference signal resource in the reference signal resource set may not be transmitted, may not be activated, or may not be a target reference signal resource. i = 1, ..., and N. In an example, the first value is 1, and the second value is 0. In an example, the first value is a non-zero value, and the second value is 0. In an example, the first value is True, and the second value is False.

In an example, the reference signal resource bitmap is an indication vector. The indication vector is a 0 - 1 array of 1 * N dimensions, where 1 denotes that a corresponding beam is selected, and 0 denotes that a corresponding beam is not selected. In an example, the reference signal resource bitmap is an indication vector. The indication vector is a Boolean array of 1 * N dimensions, where non-zero or True denotes that a corresponding beam is selected, and 0 or False denotes that a corresponding beam is not selected.

In an embodiment, a method for the network device or the terminal to select the M target reference signal resources from the N reference signal resources is that M reference signal resources are selected randomly from the N reference signal resources.

In an embodiment, a method for the network device or the terminal to select the M target reference signal resources from the N reference signal resources is that M reference signal resources are selected from the N reference signal resources according to an agreed formula or rule. The formula includes, but is not limited to, finding M smallest values, finding M largest values, finding the modulo 2 with the remainder of 1, or finding the modulo 2 with the remainder of 0.

The embodiments below are used to describe the case where one target reference signal resource in one reference signal resource set is transmitted in L slots. The reference signal resource set includes N reference signal resources. In an example, each beam corresponds to one reference signal resource. A slot may be a slot or a mini slot. One slot or mini slot includes at least one symbol. A symbol here refers to a time unit in a subframe, a frame or a slot. For example, the symbol may be an orthogonal frequency-division multiplexing (OFDM) symbol, a single-carrier frequency-division multiple access (SC-FDMA) symbol, or an orthogonal frequency-division multiple access (OFDMA) symbol.

In an embodiment, the time domain feature of a reference signal resource is semi-persistent. Through high layer signaling, a period and/or slot offset information are configured for the semi-persistent reference signal. These two parameters may be jointly encoded (for example, configured through high layer signaling periodicityAndOffset, and the user may know the transmission period and transmission slot of a periodic reference signal or the transmission period and transmission slot of the semi-persistent reference signal by obtaining the parameters). In an embodiment, a semi-persistent target reference signal resource is activated through physical layer signaling, and the semi-persistent reference signal resource is deactivated through physical layer signaling after L periods of transmission. In an example, the semi-persistent target reference signal resource is activated through MAC signaling, and the semi-persistent reference signal resource is deactivated through media access control control element (MAC CE) signaling after L periods of transmission.

In an embodiment, the time domain feature of a reference signal resource is aperiodic. For aperiodic reference signals, time domain resources of the reference signals and a reference signal resource set to which the reference signals belong are configured through high layer signaling. In an example, reference signal resources are triggered through physical layer signaling. The network device starts to transmit target reference signal resources in the S1-th slot after receiving trigger signaling and needs to transmit the target reference signal resources L times in the L slots. The terminal starts to receive the target reference signal resources in the S2-th slot after sending the trigger signaling, receives the target reference signal resources L times in the L slots, and performs measurement L times based on the reference signal resources received L times. One beam measurement parameter array is acquired in each measurement. L is an integer greater than or equal to 1.

In an embodiment, M target reference signal resources are transmitted in each of the L slots. The reference signal resource index set corresponding to the M target reference signal resources transmitted in each of the L slots is the same.

In an embodiment, M target reference signal resources are transmitted in each of the L slots. The reference signal resource index set corresponding to the M target reference signal resources transmitted in each of at least two slots among the L slots is different.

In an embodiment, different numbers of target reference signal resources are transmitted in at least two slots among the L slots, and the number Mj (j = 1, ..., and L) of target reference signal resources transmitted in the j-th shot is not less than the number Mi (i = 1, ..., and L) of target reference signal resources transmitted in the i-th slot. That is, Mi ≤ Mj, where 1 ≤ i < j ≤ L.

In an embodiment, different numbers of target reference signal resources are transmitted in at least two slots among the L slots, and the number Mj of reference signal resources transmitted in the j-th shot is not less than the number Mi of reference signal resources transmitted in the i-th slot. That is, Mi ≤ Mj, where i < j; i = 1, ..., and L; j = 1, ..., and L; and j ≥ k + c. k denotes a slot for receiving BFR signaling, c denotes the number of slots corresponding to s time units after a time unit of receiving the BFR signaling, and s, k, and j are each a positive integer. In an example, a time unit is a symbol or a mini slot. The symbol may be an OFDM symbol, an OFDMA symbol, or a single-carrier frequency-division multiple access (SC-FDMA) symbol. The slot includes K1 symbols. The mini slot includes K2 symbols. K2 < K1. K1 and K2 are each a positive integer. In an example, K1 = 12 or 14.

In an embodiment, the L slots are L consecutive slots.

In an embodiment, the L slots are L slots with an interval of T, where T denotes a transmission period of periodic or semi-persistent reference signal resources or a transmission interval agreed in aperiodic reference signal resources, and T is an integer greater than 1.

In an embodiment, slots corresponding to target reference signal resources transmitted L times are L consecutive downlink slots. In an embodiment, slots corresponding to target reference signal resources transmitted L times are L downlink slots with the same interval. In an embodiment, slots corresponding to target reference signal resources transmitted L times are L non-consecutive downlink slots.

In an embodiment, the terminal determines the value of L through the output of the neural network and feeds the value of L back to the network device. The network device determines the value of L through the L fed back by the terminal. In an example, the network device determines the L value through the output of the neural network. In an embodiment, the value of L is transmitted to the terminal through high layer signaling or physical layer signaling.

In embodiments of the present application, a resource receiving method is further provided. Received target reference signal resources are part of the resources in a reference signal resource set, avoiding unnecessary resource transmission and reducing resource overhead.

FIG. 2 is a flowchart of a resource receiving method according to an embodiment. As shown in FIG. 2, the method provided in this embodiment includes 210 and 220.

In 210, M target reference signal resources in a reference signal resource set are received, where the reference signal resource set includes N reference signal resources, M is a positive integer, N is a positive integer, and M < N.

In 220, at least one piece of beam prediction information is determined according to the M target reference signal resources, and a preferred beam is determined according to the at least one piece of beam prediction information.

In an embodiment, the M target reference signal resources include one of: M reference signal resources with smallest indices in the reference signal resource set; M reference signal resources with largest indices in the reference signal resource set; M reference signal resources, in the reference signal resource set, whose indices are odd; M reference signal resources, in the reference signal resource set, whose indices are even; M reference signal resources indicated by a reference signal resource bitmap; M reference signal resources randomly selected from the reference signal resource set; M reference signal resources selected from the reference signal resource set according to an agreed formula; or M reference signal resources selected from the reference signal resource set according to reference signal resource start and end indices.

In an embodiment, the method includes at least one of the following: first trigger signaling is transmitted, where the first trigger signaling is configured to indicate a transmission slot of the target reference signal resources; second trigger signaling is transmitted, where the second trigger signaling is configured to indicate the number of the target reference signal resources; third trigger signaling is transmitted, where the third trigger signaling is configured to indicate at least one of reference signal resource indices and/or offsets corresponding to the target reference signal resources; fourth trigger signaling is transmitted, where the fourth trigger signaling is configured to indicate reference signal resource start and end indices corresponding to the target reference signal resources; fifth trigger signaling is transmitted, where the fifth trigger signaling is configured to indicate a reference signal resource bitmap; or sixth trigger signaling is transmitted, where the sixth trigger signaling is configured to indicate a BFR parameter.

In an embodiment, the M target reference signal resources correspond to M transmit beams.

In an embodiment, the step in which the M target reference signal resources in the reference signal resource set are received includes the following: the M target reference signal resources are received in L slots, where L ≥ 1.

In an embodiment, the step in which the M target reference signal resources are received in the L slots includes receiving the M target reference signal resources in each of the L shots, where a reference signal resource index set corresponding to the M target reference signal resources received in each of the L slots is the same, or a reference signal resource index set corresponding to the M target reference signal resources received in each of at least two slots is different.

In an embodiment, different numbers of target reference signal resources are received in at least two slots among the L slots.

In an embodiment, the number of target reference signal resources transmitted in a j-th shot is not less than the number of target reference signal resources transmitted in an i-th slot, where 1 ≤ i < j ≤ L.

In an embodiment j ≥ k + c, where k denotes a slot for a base station receiving BFR signaling, c denotes the number of slots corresponding to s time units after a time unit of a network device receiving the BFR signaling, s is a positive integer, and k and j are each a positive integer.

In an embodiment, the L slots are L consecutive slots.

In an embodiment, the L slots are L slots with an interval of T, where T denotes a transmission period of periodic or semi-persistent reference signal resources or a transmission interval agreed in aperiodic reference signal resources, and T is an integer greater than 1.

In an embodiment, the transmission of the M target reference signal resources is triggered in an aperiodic manner, or the transmission of the M target reference signal resources is triggered in the L slots in an aperiodic manner, where L ≥ 1.

In an embodiment, the transmission of the M target reference signal resources is activated in a semi-persistent manner, or the transmission of the M target reference signal resources is deactivated to stop in a semi-persistent manner.

In an embodiment, the method further includes the following.

In 230, E pieces of beam prediction information are determined according to D beam measurement parameters and a neural network.

The E pieces of beam prediction information include one of beam measurement parameters corresponding to E beams, probabilities corresponding to E beams, or indices of preferred beams. The D beam measurement parameters are obtained according to the M target reference signal resources. D and E are each a positive integer, M ≤ N, N ≤ E, and M ≤ D. In an example, D = M * R, where R is the number of receive beams for receiving target reference signals. In an example, E = N * R1. R1 is the number of total receive beams of the terminal and is generally greater than or equal to R.

In an embodiment, the method further includes the following.

In 240, beam measurement parameters at Y moments are predicted according to beam measurement parameters at X historical moments. Beam prediction information includes one of beam measurement parameters corresponding to Y moments, probabilities corresponding to Y moments, or indices of preferred beams corresponding to Y moments. X is a positive integer, and Y is a positive integer.

Embodiments of the present application further provide a resource transmission apparatus. FIG. 3 is a structural diagram of a resource transmission apparatus according to an embodiment. As shown in FIG. 3, the resource transmission apparatus includes a resource determination module 310 and a resource transmission module 320.

The resource determination module 310 is configured to determine M target reference signal resources in a reference signal resource set, where the reference signal resource set includes N reference signal resources, M is a positive integer, N is a positive integer, and M < N.

The resource transmission module 320 is configured to transmit the M target reference signal resources.

For the resource transmission apparatus of this embodiment, the target reference signal resources are selected from the reference signal resource set for transmission, avoiding unnecessary resource transmission and reducing resource overhead. When beams need to be transmitted, the number of to-be-transmitted beams is generally less than the number of reference signal resources in the reference signal resource set. Beams can be transmitted through a relatively small number of reference signal resources by using this method.

In an embodiment, the resource determination module 310 is configured to perform one of the following: it is determined that M reference signal resources with smallest indices in the reference signal resource set are the target reference signal resources; it is determined that M reference signal resources with largest indices in the reference signal resource set are the target reference signal resources; it is determined that M reference signal resources, in the reference signal resource set, whose indices are odd are the target reference signal resources; it is determined that M reference signal resources, in the reference signal resource set, whose indices are even are the target reference signal resources; it is determined that M reference signal resources indicated by a reference signal resource bitmap are the target reference signal resources; M reference signal resources are selected randomly from the reference signal resource set to serve as the target reference signal resources; M reference signal resources are selected from the reference signal resource set according to an agreed formula to serve as the target reference signal resources; or M reference signal resources are selected from the reference signal resource set according to reference signal resource start and end indices to serve as the target reference signal resources.

In an embodiment, the apparatus further includes a signaling receiving module.

The signaling receiving module is configured to perform at least one of the following: first trigger signaling is received, and a transmission slot of the target reference signal resources is determined according to the first trigger signaling; second trigger signaling is received, and the number of the target reference signal resources is determined according to the second trigger signaling; third trigger signaling is received, and reference signal resource indices and/or offsets corresponding to the target reference signal resources are determined according to the third trigger signaling; fourth trigger signaling is received, and reference signal resource start and end indices corresponding to the target reference signal resources are determined according to the fourth trigger signaling; fifth trigger signaling is received, and a reference signal resource bitmap is determined according to the fifth trigger signaling; or sixth trigger signaling is received, and a BFR parameter is determined according to the sixth trigger signaling.

In an embodiment, the M target reference signal resources correspond to M transmit beams.

In an embodiment, the resource transmission module 320 is configured to transmit the M target reference signal resources in L slots, where L ≥ 1.

In an embodiment, the step in which the M target reference signal resources are transmitted in the L slots includes transmitting the M target reference signal resources in each of the L shots, where a reference signal resource index set corresponding to the M target reference signal resources transmitted in each of the L slots is the same, or a reference signal resource index set corresponding to the M target reference signal resources transmitted in each of at least two slots is different.

In an embodiment, different numbers of target reference signal resources are transmitted in at least two slots among the L slots.

In an embodiment, the number of target reference signal resources transmitted in a j-th shot is not less than the number of target reference signal resources transmitted in an i-th, where 1 ≤ i < j ≤ L.

In an embodiment, the number of target reference signal resources transmitted in the j-th shot is not less than the number of target reference signal resources transmitted in the i-th slot, where 1 ≤ i < j ≤ L, and j ≥ k + c, where k denotes a slot for receiving BFR signaling, c denotes the number of slots corresponding to s time units after a time unit of receiving the BFR signaling, and k, j, and s are each a positive integer.

In an embodiment, the L slots are L consecutive slots.

In an embodiment, the L slots are L slots with an interval of T, where T denotes a transmission period of periodic or semi-persistent reference signal resources or a transmission interval agreed in aperiodic reference signal resources, and T is an integer greater than 1.

In an embodiment, the transmission of the M target reference signal resources is triggered in an aperiodic manner, or the transmission of the M target reference signal resources is triggered in the L slots in an aperiodic manner, where L ≥ 1.

In an embodiment, the transmission of the M target reference signal resources is triggered in an aperiodic manner, or the transmission of the M target reference signal resources is triggered in the L slots in an aperiodic manner, where L ≥ 1.

In an embodiment, the transmission of the M target reference signal resources is activated in a semi-persistent manner, or the transmission of the M target reference signal resources is deactivated to stop in a semi-persistent manner.

In an embodiment, the apparatus further includes a parameter receiving module, a first prediction module, and a first beam determination module.

The parameter receiving module is configured to receive M beam measurement parameters fed back by a terminal.

The first prediction module is configured to determine E pieces of beam prediction information according to D beam measurement parameters and a neural network.

The first beam determination module is configured to determine preferred beams according to the E pieces of beam prediction information.

Beam prediction information includes one of beam measurement parameters corresponding to E beams, probabilities corresponding to E beams, or indices of preferred beams. The D beam measurement parameters are obtained according to the M target reference signal resources. The number of preferred beams is K. M ≤ N. N ≤ E. M ≤ D. D, E, N, M, and K are each an integer. K ≥ 1. M ≥ K. N > M. E is an integer greater than D. In an example, D = M * R, where R is the number of receive beams for receiving target reference signals. In an example, E = N * R1. N is a positive integer greater than M and denotes the number of reference signal resources. In some cases, N is equal to the number of transmit beams. R1 is the number of total receive beams of the terminal and is generally greater than or equal to R.

In an embodiment, the apparatus further includes a second prediction module and a second beam determination module.

The second prediction module is configured to predict beam measurement parameters at Y moments according to beam measurement parameters at X historical moments.

The second beam determination module is configured to determine preferred beams corresponding to the Y moments according to beam measurement parameters at L moments.

X is a positive integer, and Y is a positive integer.

The resource transmission apparatus provided in this embodiment and the resource transmission method provided in the preceding embodiments belong to the same inventive concept. For technical details not described in detail in this embodiment, reference may be made to any one of the preceding embodiments, and this embodiment has the same beneficial effects as the resource transmission method performed.

Embodiments of the present application further provide a resource receiving apparatus. FIG. 4 is a structural diagram of a resource receiving apparatus according to an embodiment. As shown in FIG. 4, the resource receiving apparatus includes a resource receiving module 410 and a beam determination module 420.

The resource receiving module 410 is configured to receive M target reference signal resources in a reference signal resource set, where the reference signal resource set includes N reference signal resources, M is a positive integer, N is a positive integer, and M < N.

The beam determination module 420 is configured to determine at least one piece of beam prediction information according to the M target reference signal resources and determine a preferred beam according to the at least one piece of beam prediction information.

For the resource receiving apparatus of this embodiment, received target reference signal resources are part of the resources in a reference signal resource set, avoiding unnecessary resource transmission and reducing resource overhead. When beams need to be received, the number of to-be-received beams is generally less than the number of reference signal resources in the reference signal resource set. Beams can be received through a relatively small number of reference signal resources by using this method.

In an embodiment, the M target reference signal resources include one of: M reference signal resources with smallest indices in the reference signal resource set; M reference signal resources with largest indices in the reference signal resource set; M reference signal resources, in the reference signal resource set, whose indices are odd; M reference signal resources, in the reference signal resource set, whose indices are even; M reference signal resources indicated by a reference signal resource bitmap; M reference signal resources randomly selected from the reference signal resource set; M reference signal resources selected from the reference signal resource set according to an agreed formula; or M reference signal resources selected from the reference signal resource set according to reference signal resource start and end indices.

In an embodiment, the apparatus further includes a signaling transmission module.

The signaling transmission module is configured to perform at least one of the following: first trigger signaling is transmitted, where the first trigger signaling is configured to indicate a transmission slot of the target reference signal resources; second trigger signaling is transmitted, where the second trigger signaling is configured to indicate the number of the target reference signal resources; third trigger signaling is transmitted, where the third trigger signaling is configured to indicate at least one of reference signal resource indices and/or offsets corresponding to the target reference signal resources; fourth trigger signaling is transmitted, where the fourth trigger signaling is configured to indicate reference signal resource start and end indices corresponding to the target reference signal resources; fifth trigger signaling is transmitted, where the fifth trigger signaling is configured to indicate a reference signal resource bitmap; or sixth trigger signaling is transmitted, where the sixth trigger signaling is configured to indicate a BFR parameter.

In an embodiment, the M target reference signal resources correspond to M transmit beams.

In an embodiment, the resource receiving module 410 is configured to receive the M target reference signal resources in L slots, where L ≥ 1.

In an embodiment, the step in which the M target reference signal resources are received in the L slots includes receiving the M target reference signal resources in each of the L shots, where a reference signal resource index set corresponding to the M target reference signal resources received in each of the L slots is the same, or a reference signal resource index set corresponding to the M target reference signal resources received in at least two slots is different.

In an embodiment, different numbers of target reference signal resources are received in at least two slots among the L slots.

In an embodiment, the number of target reference signal resources received in a j-th shot is not less than the number of target reference signal resources received in an i-th slot, where 1 ≤ i < j ≤ L.

In an embodiment, the number of target reference signal resources received in the j-th shot is not less than the number of target reference signal resources received in the i-th slot, where 1 ≤ i < j ≤ L, and j ≥ k + c, where k denotes a slot for receiving BFR signaling, c denotes the number of slots corresponding to s time units after a time unit of a network device receiving the BFR signaling, and k, j, and s are each a positive integer.

In an embodiment, the L slots are L consecutive slots.

In an embodiment, the L slots are L slots with an interval of T, where T denotes a transmission period of periodic or semi-persistent reference signal resources or a transmission interval agreed in aperiodic reference signal resources, and T is an integer greater than 1.

In an embodiment, the transmission of the M target reference signal resources is triggered in an aperiodic manner, or the transmission of the M target reference signal resources is triggered in the L slots in an aperiodic manner, where L ≥ 1.

In an embodiment, the transmission of the M target reference signal resources is triggered in an aperiodic manner, or the transmission of the M target reference signal resources is triggered in the L slots in an aperiodic manner, where L ≥ 1.

In an embodiment, the transmission of the M target reference signal resources is activated in a semi-persistent manner, or the transmission of the M target reference signal resources is deactivated to stop in a semi-persistent manner.

In an embodiment, the apparatus further includes a third prediction module.

The third prediction module is configured to determine E pieces of beam prediction information according to D beam measurement parameters and a neural network. Beam prediction information includes one of beam measurement parameters corresponding to E beams, probabilities corresponding to E beams, or indices of preferred beams. The D beam measurement parameters are obtained according to the M target reference signal resources. The number of preferred beams is K. M ≤ N. N ≤ E. M ≤ D. D, E, N, and M are each an integer. M ≥ K. N > M. E is an integer greater than D. In an example, D = M * R, where R is the number of receive beams for receiving target reference signals. In an example, E = N * R1. N is a positive integer greater than M and denotes the number of reference signal resources. In some cases, N is equal to the number of transmit beams. R1 is the number of total receive beams of the terminal and is generally greater than or equal to R.

In an embodiment, the apparatus further includes a fourth prediction module.

The fourth prediction module is configured to predict beam measurement parameters at Y moments according to beam measurement parameters at X historical moments. Beam prediction information includes one of beam measurement parameters corresponding to Y moments, probabilities corresponding to beams corresponding to Y moments, or indices of preferred beams. X is a positive integer, and Y is a positive integer.

The resource receiving apparatus provided in this embodiment and the resource receiving method provided in the preceding embodiments belong to the same inventive concept. For technical details not described in detail in this embodiment, reference may be made to any one of the preceding embodiments, and this embodiment has the same beneficial effects as the resource receiving method performed.

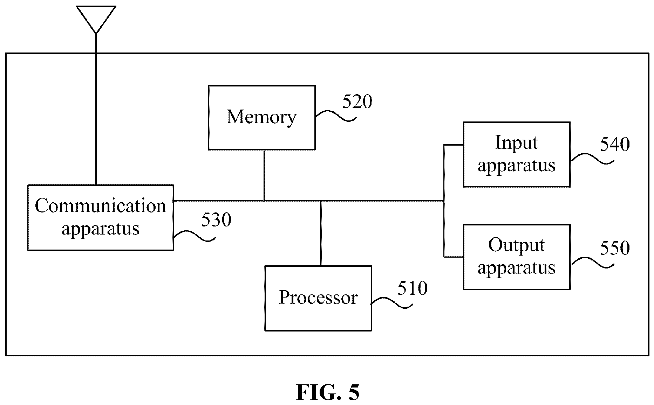

Embodiments of the present application further provide a communication node. FIG. 5 is a diagram illustrating a hardware structure of a communication node according to an embodiment. As shown in FIG. 5, the communication node provided by the present application includes a processor 510 and a memory 520. One or more processors 510 may be provided in the communication node. In FIG. 5, one processor 510 is used as an example. The memory 520 is configured to store one or more programs. The one or more programs are executed by the one or more processors 510 to cause the one or more processors 510 to perform the resource transmission method or resource receiving method provided in embodiments of the present application.

The communication node further includes a communication apparatus 530, an input apparatus 540, and an output apparatus 550.

The processor 510, the memory 520, the communication apparatus 530, the input apparatus 540 and the output apparatus 550 in the communication node may be connected through a bus or in other manners. In FIG. 5, the connection through a bus is used as an example.

The input apparatus 540 may be configured to receive inputted digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs and modules, such as program instructions/modules (for example, the resource determination module 310 and the resource transmission module 320 that are in the resource transmission apparatus) corresponding to the resource transmission method according to embodiments of the present application. The memory 520 may include a program storage region and a data storage region, where the program storage region may store an operating system and an application program required by at least one function, and the data storage region may store data and the like created according to the use of the communication node. Additionally, the memory 520 may include a high-speed random-access memory and may also include a nonvolatile memory, such as at least one magnetic disk memory, a flash memory or another nonvolatile solid-state memory. In some examples, the memory 520 may further include memories located remotely relative to the processor 510, and these remote memories may be connected to the communication node via a network. Examples of the preceding network include, but are not limited to, the Internet, an intranet, a local area network, a mobile communication network and a combination thereof.

Embodiments of the present application further provide a storage medium. The storage medium stores a computer program, where when the computer program is executed by a processor, the resource transmission method or resource receiving method described in any embodiment of the present application is performed.

The resource transmission method includes determining M target reference signal resources in a reference signal resource set, where the reference signal resource set includes N reference signal resources, M is a positive integer, N is a positive integer, and M < N; and transmitting the M target reference signal resources.

The resource receiving method includes receiving M target reference signal resources in a reference signal resource set, where the reference signal resource set includes N reference signal resources, M is a positive integer, N is a positive integer, and M < N; and determining M beam measurement parameters according to the M target reference signal resources.

A computer storage medium in an embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included on the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case related to the remote computer, the remote computer may be connected to the user computer via any type of network including a local area network (LAN) or a wide area network (WAN) or may be connected to an external computer (for example, via the Internet through an Internet service provider).

The preceding are only example embodiments of the present application and are not intended to limit the scope of the present application.

It is to be understood by those skilled in the art that the term "user terminal" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) or an optical memory device and system (for example, a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA) and a processor based on a multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

## Claims

**1.** A resource transmission method, comprising:
determining M target reference signal resources in a reference signal resource set, wherein the reference signal resource set comprises N reference signal resources, M is a positive integer, N is a positive integer, and M < N; and
transmitting the M target reference signal resources.

**2.** The method according to claim 1, wherein determining the M target reference signal resources in the reference signal resource set comprises one of:
determining that M reference signal resources with smallest indices in the reference signal resource set are the target reference signal resources;
determining that M reference signal resources with largest indices in the reference signal resource set are the target reference signal resources;
determining that M reference signal resources, in the reference signal resource set, whose indices are odd are the target reference signal resources;
determining that M reference signal resources, in the reference signal resource set, whose indices are even are the target reference signal resources;
determining that M reference signal resources indicated by a reference signal resource bitmap are the target reference signal resources;
selecting M reference signal resources randomly from the reference signal resource set to serve as the target reference signal resources;
selecting M reference signal resources from the reference signal resource set according to an agreed formula to serve as the target reference signal resources; or
selecting M reference signal resources from the reference signal resource set according to reference signal resource start and end indices to serve as the target reference signal resources.

**3.** The method according to claim 1, further comprising at least one of:
receiving first trigger signaling and determining, according to the first trigger signaling, a transmission slot of the target reference signal resources;
receiving second trigger signaling and determining, according to the second trigger signaling, a number of the target reference signal resources;
receiving third trigger signaling and determining, according to the third trigger signaling, at least one of reference signal resource indices or offsets corresponding to the target reference signal resources;
receiving fourth trigger signaling and determining, according to the fourth trigger signaling, reference signal resource start and end indices corresponding to the target reference signal resources;
receiving fifth trigger signaling and determining, according to the fifth trigger signaling, a reference signal resource bitmap; or
receiving sixth trigger signaling and determining, according to the sixth trigger signaling, a beam failure recovery, BFR, parameter.

**4.** The method according to claim 1, wherein the M target reference signal resources correspond to M transmit beams.

**5.** The method according to claim 1, wherein transmitting the M target reference signal resources comprises:
transmitting the M target reference signal resources in L slots, wherein L ≥ 1.

**6.** The method according to claim 5, wherein transmitting the M target reference signal resources in the L slots comprises:
transmitting the M target reference signal resources in each of the L shots;
wherein reference signal resources corresponding to the M target reference signal resources have a same index set, or reference signal resources corresponding to the M target reference signal resources transmitted in at least two slots among the L slots have different index sets.

**7.** The method according to claim 5, wherein different numbers of target reference signal resources are transmitted in at least two slots among the L slots.

**8.** The method according to claim 7, wherein a number of target reference signal resources transmitted in a j-th shot among the L slots is greater than or equal to a number of target reference signal resources transmitted in an i-th slot among the L slots, wherein 1 ≤ i < j ≤ L.

**9.** The method according to claim 8, wherein j ≥ k + c, wherein k denotes a slot for receiving beam failure recovery, BFR, signaling, c denotes a number of slots corresponding to s time units after a time unit of receiving the BFR signaling, s is a positive integer, and k is a positive integer.

**10.** The method according to claim 5, wherein the L slots are L consecutive slots.

**11.** The method according to claim 5, wherein the L slots are L slots with an interval of T,
wherein T denotes a transmission period of periodic or semi-persistent reference signal resources or a transmission interval agreed in aperiodic reference signal resources, and T is an integer greater than 1.

**12.** The method according to claim 5, wherein transmission of the M target reference signal resources is triggered in an aperiodic manner, or transmission of the M target reference signal resources is triggered in the L slots in an aperiodic manner, wherein L ≥ 1.

**13.** The method according to claim 5, wherein transmission of the M target reference signal resources is activated in a semi-persistent manner, or transmission of the M target reference signal resources is deactivated to stop in a semi-persistent manner.

**14.** A resource receiving method, comprising:
receiving M target reference signal resources in a reference signal resource set, wherein the reference signal resource set comprises N reference signal resources, M is a positive integer, N is a positive integer, and M < N; and
determining at least one piece of beam prediction information according to the M target reference signal resources and determining a preferred beam according to the at least one piece of beam prediction information.

**15.** The method according to claim 14, wherein the M target reference signal resources comprises one of:
M reference signal resources with smallest indices in the reference signal resource set;
M reference signal resources with largest indices in the reference signal resource set;
M reference signal resources, in the reference signal resource set, whose indices are odd;
M reference signal resources, in the reference signal resource set, whose indices are even;
M reference signal resources indicated by a reference signal resource bitmap;
M reference signal resources randomly selected from the reference signal resource set;
M reference signal resources selected from the reference signal resource set according to an agreed formula; or
M reference signal resources selected from the reference signal resource set according to reference signal resource start and end indices.

**16.** The method according to claim 14, further comprising at least one of:
transmitting first trigger signaling, wherein the first trigger signaling is configured to indicate a transmission slot of the target reference signal resources;
transmitting second trigger signaling, wherein the second trigger signaling is configured to indicate a number of the target reference signal resources;
transmitting third trigger signaling, wherein the third trigger signaling is configured to indicate at least one of reference signal resource indices or offsets corresponding to the target reference signal resources;
transmitting fourth trigger signaling, wherein the fourth trigger signaling is configured to indicate reference signal resource start and end indices corresponding to the target reference signal resources;
transmitting fifth trigger signaling, wherein the fifth trigger signaling is configured to indicate a reference signal resource bitmap; or
transmitting sixth trigger signaling, wherein the sixth trigger signaling is configured to indicate a beam failure recovery, BFR, parameter.

**17.** The method according to claim 14, wherein the M target reference signal resources correspond to M transmit beams.

**18.** The method according to claim 14, wherein receiving the M target reference signal resources in the reference signal resource set comprises:
receiving the M target reference signal resources in L slots, wherein L ≥ 1.

**19.** The method according to claim 18, wherein receiving the M target reference signal resources in the L slots comprises:
receiving the M target reference signal resources in each of the L shots;
wherein a reference signal resource index set corresponding to the M target reference signal resources received in each of the L slots is the same, or a reference signal resource index set corresponding to the M target reference signal resources received in each of at least two slots among the L slots is different.

**20.** The method according to claim 18, wherein different numbers of target reference signal resources are received in at least two slots among the L slots.

**21.** The method according to claim 20, wherein a number of target reference signal resources received in a j-th shot among the L slots is greater than or equal to a number of target reference signal resources received in an i-th slot among the L slots, wherein 1 ≤ i < j ≤ L.

**22.** The method according to claim 21, wherein j ≥ k + c, wherein k denotes a slot for receiving beam failure recovery, BFR, signaling, c denotes a number of slots corresponding to s time units after a time unit of receiving the BFR signaling, s is a positive integer, and k and j are each a positive integer.

**23.** The method according to claim 18, wherein the L slots are L consecutive slots.

**23.** The method according to claim 18, wherein the L slots are L consecutive slots.

**24.** The method according to claim 18, wherein the L slots are L slots with an interval of T,
wherein T denotes a transmission period of periodic or semi-persistent reference signal resources or a transmission interval agreed in aperiodic reference signal resources, and T is an integer greater than 1.

**25.** A communication node, comprising a memory and one or more processors, wherein
the memory is configured to store at least one program; and
wherein the at least one program is executed by the at least one processor to cause the at least one processor to perform the resource transmission method according to any one of claims 1 to 13 or the resource receiving method according to any one of claims 14 to 24.

**26.** A computer-readable storage medium for storing a computer program, wherein the computer program, when executed by a processor, performs the resource transmission method according to any one of claims 1 to 13 or the resource receiving method according to any one of claims 14 to 24.
